# EUROPÄISCHE PATENTSCHRIFT

(11) **EP 0 728 322 B1**
(45) Veröffentlichungstag und Bekanntmachung des Hinweises auf die Patenterteilung: **03.03.1999**
(21) Anmeldenummer: 95932669.5
(22) Anmeldetag: 05.09.1995
(51) Int. Cl.: G02B 21/00

(54) **MIKROSKOPISCHER SENDER ODER DETEKTOR ELEKTROMAGNETISCHER STRAHLUNG**
MICROSCOPIC ELECTROMAGNETIC RADIATION TRANSMITTER OR DETECTOR
EMETTEUR OU DETECTEUR MICROSCOPIQUE DE RAYONNEMENT ELECTROMAGNETIQUE

(30) Priorität: 09.09.1994 DE 9414582 U
(43) Veröffentlichungstag der Anmeldung: 28.08.1996
(73) Patentinhaber: Fischer, Ulrich, 48159 Münster (DE)
(72) Erfinder: Fischer, Ulrich, 48159 Münster (DE)
(74) Vertreter: Fritz, Edmund Lothar, Dipl.-Chem.
(86) Internationale Anmeldenummer: EP9503491
(87) Internationale Veröffentlichungsnummer: WO9607946

(56) Entgegenhaltungen:
- EP-A- 0 112 401
- DE-A- 4 329 985
- U.C. FISCHER ET AL.: "The tetrahedral tip as a probe for scanning near-field optical microscopy at 30 nm resolution", JOURNAL OF MICROSCOPY, Dec. 1994, , Band 176, Nr. PT3, Seiten 231 - 237
- J. KOGLIN ET AL.: "Material contrast in scanning near-field optical microscopy at 1-10 nm resolution", PHYSICAL REVIW B, , 15-03-1997, Band 55, Nr. 12, Seiten 7977 - 7984

## Beschreibung

Die vorliegende Erfindung betrifft einen mikroskopischen Sender oder Detektor elektromagnetischer Strahlung, der im weiteren als Nahfeldsonde bezeichnet wird, insbesondere eine Nahfeldsonde, deren Körper die Form einer Polyederspitze hat, und aus einem Material besteht, daß wenigstens teilweise für elektromagnetische Strahlung im verwendeten Spektralbereich durchlässig ist, wobei die Polyederspitze durch eine gedachte Grundfläche begrenzt ist, über die hinaus der wesentliche Teil des Körpers zu einem nicht näher spezifizierten Gesamtkörper der Sonde fortgesetzt ist, und n Seitenflächen hat dergestalt, daß zwischen benachbarten Seitenflächen scharfe Kanten ausgebildet sind, die in eine scharfe Spitze münden, wobei die Spitze der Nahfeldsonde als nahezu punktförmige Quelle für die Emission elektromagnetischer Strahlung in den Außenraum der Sonde oder als nahezu punktförmiger Empfänger für das Eindringen elektromagnetischer Felder in das Innere der Nahfeldsonde dient, wobei mindestens zwei Seitenflächen des Körpers der Polyedersonde mit dünnen, die elektromagnetische Strahlung im verwendeten Spektralbereich partiell absorbierenden, elektrisch leitenden Schichten beschichtet sind, die eine Dicke von weniger als 0,2 µm aufweisen.

Bekannte Sonden der genannten Art haben die für ihre Sensorfunktion wesentliche Eigenschaft, daß an der Spitze eine Apertur in einem Metallfilm angebracht ist, der vorzugsweise aus Materialien wie Aluminium, Gold oder Silber besteht. Zu diesen bekannten Sonden gehören
a) die Sonden von Pohl, (D.W. Pohl, W. Denk, M. Lanz (1984). Appl. Phys. Lett. 44, 651-653.) bestehend aus einer in eine Spitze mündende Glas- oder Quarzfaser, die mit Metall beschichtet ist, derart, daß an der Spitze eine Öffnung in der Metallbeschichtung besteht.
b) Die Sonde von Betzig et al (E. Betzig, J.K. Trautman, T.D. Harris, J.S. Weiner, R.L. Kostelak, (1991). Science, Vol. 251, 1468 - 1470.), die ganz ähnlich wie die von Pohl et al aus einer in eine Spitze mündenden mit Metall beschichteten Glasfaser besteht, deren Metallbeschichtung eine submikroskopische Öffnung an der Spitze hat. Aufgrund der Öffnung in der Metallbeschichtung ist der vorderste Teil der Spitze unbeschichtet. Diese Sonden haben den Nachteil, daß die komplexe Struktur einer Apertur in einem Metallfilm direkt an der Spitze die minimalen Abmessungen der Spitze auf ca 0.1 µm beschränkt, wobei die Apertur nicht kleiner sein kann als ca. 15 nm. Daher ist zu erwarten, daß mit der erreichten Auflösung von 13 nm die Grenze des Auflösungsvermögens der optischen Nahfeldrastermikroskopie SNOM (Scanning Near Field Optical Microscopy) mit solchen Spitzen erreicht ist. Gleichzeitig bedingt die Breite der Spitze von mindestens 0.1 µm, daß die Apertur nur in Ausnahmefällen auf eine Distanz von weniger als 15 nm an die Oberfläche herangeführt werden kann, die für ein Erreichen der Auflösung von 15 nm erforderlich ist.

Den gleichen Nachteil hat auch die von Danzebrink und Fischer beschriebene Tetraedersonde, die in der Anmeldung (DE 43 29 985 A1) beschrieben ist. Diese Sonde hat jedoch gegenüber den unter a) und b) beschriebenen Sonden den Vorteil, daß Sie die Funktion des Übertragungsgliedes besser erfüllt.

Da in beiden Fällen die Apertur die Funktion der SNOM Sonde erfüllt, die nicht überall elektrisch leitend ist, ist eine simultane SNOM und Rastertunnelmikroskopie hoher lateraler Auflösung mit der identischen Spitze in diesen Fällen nicht möglich.

Der Erfindung liegt das Problem zugrunde, eine effiziente Nahfeldsonde zu schaffen, mit der eine möglichst hohe Auflösung in der optischen Nahfeldrastermikroskopie zu erzielen ist und die die simultane Rastertunnelmikroskopie mit derselben Spitze ermöglicht.

Die Lösung dieses Problems wird erfindungsgemäß dadurch erreicht, daß auch der vorderste Teil der Polyederspitze mit dem verwendeten Beschichtungsmaterial beschichtet ist. Diese Vorrichtung bietet den Vorteil, daß die Auflösung eines mit dieser Sonde ausgestatteten Nahfeldmikroskops nicht mehr durch die Apertur begrenzt wird, da der vorderste Teil der Spitze selbst als Sender bzw. Empfänger elektromagnetischer Felder dient. Da weiterhin der vorderste Teil der Spitze mit einem elektrisch leitenden Material beschichtet ist, kann die Nahfeldsonde sowohl in der optischen Nahfeldmikroskopie mit hoher Auflösung als auch simultan in der Rastertunnelmikroskopie eingesetzt werden.

Die in den Unteransprüchen beschriebenen Ausgestaltungen des Erfindungsgedankens beinhalten weitere Vorteile.

Weitere Vorteile und Merkmale der Erfindung werden aus der folgenden Beschreibung einiger bevorzugter Ausführungsbeispiele unter Bezugnahme auf die beiliegenden Abbildungen deutlich. Darin zeigen:
- Fig. 1: eine schematische Darstellung der Polyedersonde;
- Fig. 2 a und b: eine schematische Darstellung der Anordnungen der Polyedersonde in einem optischen Nahfeldmikroskop;
- Fig. 3: eine schematische Darstellung zur Rotationsbedampfung der Polyedersonde;
- Fig. 4: eine schematische Darstellung zur Beschichtung der Polyedersonde mit einer unbeschichteten Kante;
- Fig. 5: einen inversen Dunkelfeldkollektor für die inverse Photonentunnelmikroskopie;
- Fig. 6: ein gemessene Abstandsabhängigkeit des Nahfeldsignal in einem inversen Photonentunnelmikroskop; auf der Ordinate ist die Intensität des Nahfeldsignals aufgetragen, auf der Abszisse ist der relative Abstand zwischen Spitze (2) und Objekt (6) aufgetragen; der absolute Abstand ist nicht bekannt;
- Fig. 7: eine rasterkraftmikroskopische Aufnahme des Testobjektes;
- Fig. 8: eine Aufnahme des Testobjektes mit einem inversen Photonentunnelmikroskop mit einer Tetraederspitze in Ausführungsform 1;
- Fig. 9: eine Reflexionsanordnung mit Bestrahlung der Spitze von außen;
- Fig. 10: eine Auflicht- Reflexionsanordnung.

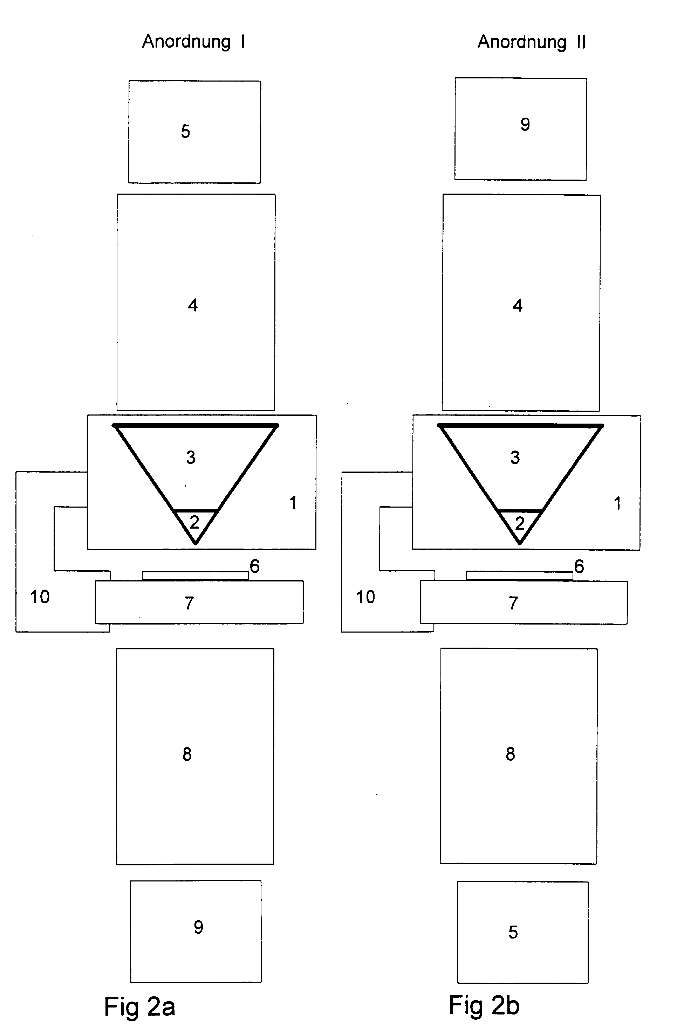

Bei bekannten Anordnungen der optischen Nahfeldrastermikroskopie SNOM (Scanning Near Field Optical Microscopy) dient eine Spitze 2 mit submikroskopischen Abmessungen, die kleiner sind als die Wellenlänge der verwendeten elektromagnetischen Strahlung in Anordnung I (Fig. 2a) als submikroskopische Sendeantenne und in Anordnung II als Empfangsantenne. In der Anordnung I wird Licht, ausgehend von einer Lichtquelle 5 über ein Übertragungsglied 4 auf die Nahfeldsonde 1 eingestrahlt. Bei dem Übertragungsglied 4 kann es sich um einen Wellenleiter, wie z.B. eine Glasfaser oder auch um einen optischen Strahlengang mit Linsen, oder aber um eine Kombination mehrerer solcher Komponenten handeln. Ein weiteres Übertragungsglied 3 dient dazu, Lichtenergie vom Übertragungsglied 4 auf die Spitze 2 zu übertragen. Das Übertragungsglied 3 dient also dazu, Licht von einem Bereich mit Abmessungen, die groß gegen oder vergleichbar zu der Wellenlänge des Lichtes sind, auf die Spitze 2 zu übertragen, die Abmessungen hat, die klein sind gegen die Wellenlänge. Das Übertragungsglied 3 und die Spitze 2 sind die wesentlichen für die Ausführungsform eines Nahfeldmikroskopes charakteristischen Komponenten. Sie bilden die Nahfeldsonde 1. Die Spitze 2 ist in unmittelbarer Nähe zur Oberfläche des Objektes 6 angebracht, das von einem Objektträger 7 gehalten wird. Eine Verschiebevorrichtung 10 dient dazu, das Objekt in drei Dimensionen relativ zur Spitze zu verschieben. Licht, das vom Objekt 6 abgestrahlt wird, wird von einem Übertragungsglied 8 auf den Detektor 9 übertragen, der dazu dient, das empfangene Signal in ein elektrisches Signal, das Nahfeldsignal zu wandeln, das als Signal für die optische Nahfeldmikroskopie weiterverarbeitet wird. In Anordnung II (Fig. 2b) mit Spitze 2 als Empfangsantenne sind die Positionen von Quelle 5 und Detektor 9 ausgetauscht. Sind Quelle 5 und Detektor 9 und die zugehörigen Wege der Energieübertragung zur Spitze 2 bzw. zum Objekt 6 auf entgegengesetzten Seiten des Objektes 6 angebracht wie in Fig. 2 dargestellt, so spricht man von einer Transmissionsanordnung. Sind diese Komponenten auf der gleichen Seite des Objektes angebracht, spricht man von einer Reflexionsanordnung. Bei der optischen Nahfeldmikroskopie wird ausgenutzt, daß das Objekt 6 in unmittelbarer Nähe der Spitze 2, d.h. innerhalb der Reichweite des Nahfeldes der Spitze, eine Rückwirkung ausübt auf die Emission oder Absorption der Sonde 1, so daß das vom Detektor 9 empfangene Signal (optisches Nahfeldsignal) eine charakteristische Funktion des Abstandes zwischen Spitze 2 und Objektoberfläche und auch der lokalen optischen Eigenschaften der Oberfläche des Objektes 6 ist. Die Spitze 2 wird in einem Abstand von der halben Wellenlänge bis zu weniger als einem nm über die Oberfläche des Objekts 6 geführt. Die optische Nahfeldrastermikroskopie wurde in mehreren verschiedenen Versionen demonstriert, die sich im wesentlichen durch die Art der verwendeten Sonden 1 und durch die Anordnungen der Sonden für das mikroskopische Verfahren, d.h. durch die Art und die Anordnung der Übertragungsglieder 3, 4 und 8 für die Wege der Energieübertragung zwischen Spitze 2 und Detektor 9 einerseits und zwischen Quelle 5 und Spitze 2 andererseits unterscheiden.

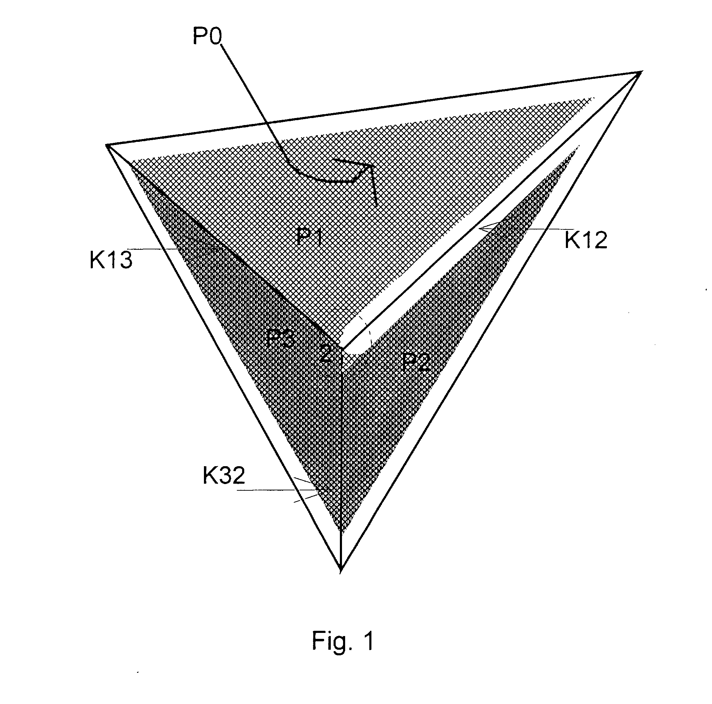

Eine erfindungsgemäße Sonde kann die in Fig.1 für den Fall der Tetraederspitze (n=3) dargestellte Form eines zu einer Spitze 2 zulaufenden Polyeders aus einem transparenten Material haben. Die Seitenflächen Pⱼ (j = 1,..,n) sind mit dünnen Filmen eines partiell die elektromagnetische Strahlung absorbierenden elektrisch leitfähigen Materiales, wie z. B. eines elektrisch leitenden Metalles beschichtet, dergestalt, daß die Spitze 2 selbst auch mit beschichtet ist, d.h., daß der am weitesten hervorragende Teil der Spitze 2 aus dem Beschichtungsmaterial besteht. Die Kanten Kᵢₖ zwischen den beschichteten Flächen Pᵢ und Pₖ können unbeschichtet oder auch mit dem Beschichtungsmaterial beschichtet sein. Unbeschichtete Kanten können der Funktion der Übertragung elektromagnetischer Energie von makroskopischen Dimensionen in den mikroskopischen Bereich der Spitze 2 dienen wie schon in der Offenlegungschrift (DE 43 29 985 A1) beschrieben. Sie haben die Funktion des Übertragungsgliedes 3 aus Fig.2. Weiterhin besteht die Möglichkeit, nur zwei der Seitenflächen Pⱼ (j=1,...,n) und den am weitesten hervorragenden Teil der Spitze 2 zu beschichten, wobei die zwischen den beiden beschichteten Seitenflächen Pⱼ (j=1,...,n) Kante Kᵢₖ beschichtet oder unbeschichtet sein kann.

Die Ausbildung der von der Spitze abgewandten Grundfläche P₀ ist offen gelassen, es kann sich z. B. um eine geschliffene Fläche handeln, es kann sich aber auch nur um eine gedachte Trennfläche handeln zu einer Fortsetzung des Polyeders zu einem geeigneten Körper beliebiger Abmessung.

Das transparente Material des Körpers der Nahfeldsonde kann ein transparentes amorphes Glas sein, aber auch transparentes kristallines Material wie Diamant, Quarz, Saphir oder auch Silizium für den infraroten Spektralbereich. Es kann sich auch um Material mit hohen nichtlinearen Suszeptibilitäten wie z.B. Lithiumniobat handeln oder um photolumineszierendes Material, wie z. B. dotierte Gläser oder Kristalle. Das Material muß nicht notwendigerweise homogen und isotrop sein. Die Oberfläche des Körpers oder Ausschnitte der Oberfläche des Körpers können mit einer dünnen Schicht eines anderen Brechungsindexes versehen sein, einer Kontaminationsschicht, einer Dotierungsschicht oder einer dünnen Beschichtung aus einem anderen Material versehen sein.

Die Herstellung des Körpers K solcher Nahfeldsonden kann auf verschiedenste Weisen erfolgen. Einige Herstellungsverfahren sind im folgenden beschrieben. Verwendet man amorphe oder polykristalline Materialien wie z. B. Glas, so können Brüche in verschiedenen Richtungen herbeigeführt werden. Durch mehrfaches Brechen eines Glaskörpers kann z.B. eine Tetraederspitze hergestellt werden. Dieses Verfahren des Brechens zur Herstellung des Körpers von Polyedersonden ist auch auf andere Materialien übertragbar, insbesondere auch auf kristalline Materialien, bei denen Brüche bevorzugt entlang von ausgewählten Kristallebenen erfolgen. Durch kontrolliertes Anritzen und Spalten entlang dieser Ebenen lassen sich sehr exakte Kanten und ggf. Ecken herstellen.

Ferner ist es möglich, entsprechende Kanten und Flächen auch durch Verfahren des Schleifens Polierens und Ätzens herzustellen.

Ferner ist es möglich, solche Spitzen durch mikrolithographische Verfahren zu erzeugen, wie es z. B. im Fall von Siliziumspitzen bekannt ist, die im infraroten Spektralbereich transparent sind.

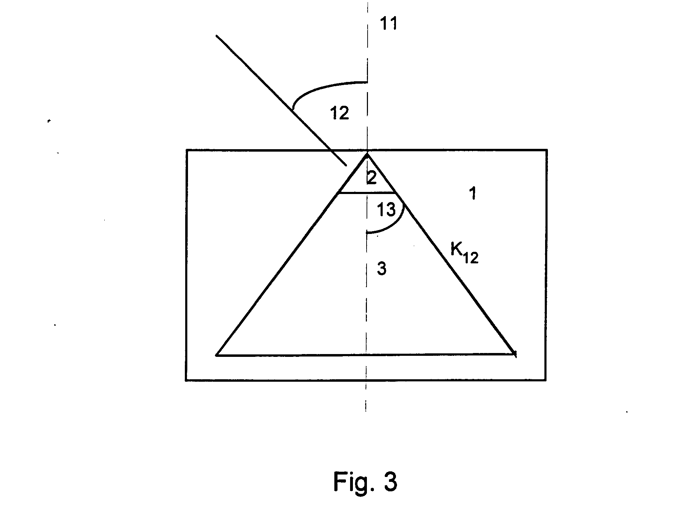

Die Seitenflächen Pⱼ (j=1,...,n) können mit einem dünnen Film eines Schichtungsmaterials beschichtet sein, das durch Sputtern oder thermisches Verdampfen oder aber auch durch andere Methoden aufgebracht werden kann. Die Beschichtung kann z.B. durch Rotationsbedampfung erfolgen, bei der die Polyederspitze während der Bedampfung um eine durch die Spitze laufende Achse 11 rotiert. Diese Rotationsachse 11 ist relativ zum Dampfstrahl unter einem Winkel 12 kleiner 90° geneigt wie in Fig.3 dargestellt, wobei der Winkel 12 während der Beschichtung variiert werden kann. Auf diese Weise werden die Spitze und alle Seitenflächen und alle Kanten zwischen den Seitenflächen mit Metall beschichtet.

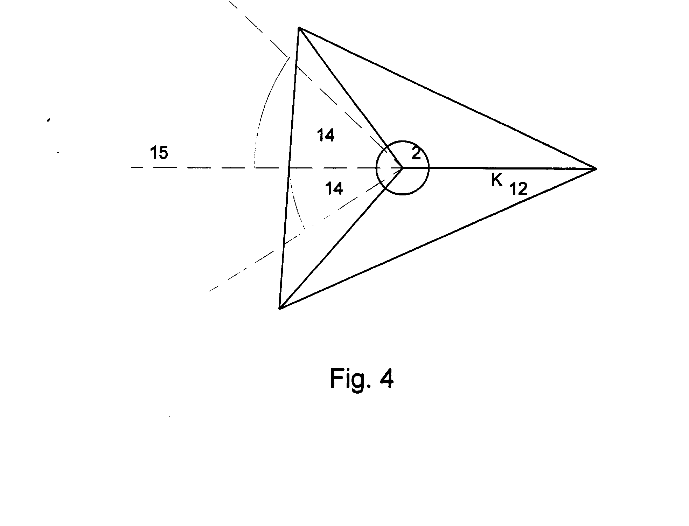

Andererseits kann für den Fall der Tetraederspitze die Beschichtung zweier benachbarter Seitenflächen P₁ und P₂ in zwei Schritten so erfolgen, daß die Kante K₁₂ unbeschichtet bleibt bzw. mit einer im Vergleich zur Beschichtung der Seitenflächen geringen Schichtdicke beschichtet ist. Die Beschichtung der Seiten erfolgt nacheinander mit einem Materialdampfstrahl dessen Richtung unter einem Winkel 12 kleiner 90° zu der durch die Spitze verlaufenden Achse 11 geneigt ist, wobei Winkel 12 gleichzeitig größer ist als der Winkel 13 zwischen der Kante K₁₂ und der Achse 11 und dessen Richtung außerdem unter einem Winkel 14 kleiner 90° geneigt ist relativ zu der durch die Kante K₁₂ laufenden Achse 15 (Fig.4).

Auch für den Fall einer Polyederspitze mit beliebig vielen Seitenflächen ist es möglich die Beschichtung so auszuführen, daß eine Kante unbeschichtet ist, während alle Seiten, alle anderen Kanten und die Spitze beschichtet sind. In diesem Fall erfolgt die Beschichtung aus den oben angegebenen Bereichen der Winkel (12) und (14), wobei während der Beschichtung diese Winkel variiert werden.

In bevorzugten Ausführungsformen der erfundenen Polyedersonde 1 erfüllen die zu einer Spitze zulaufenden scharfen Kanten Kᵢₖ, die Beschichtungen mit dem Beschichtungsmaterial und das Material der Sonde Funktionen, die für Ihre Eigenschaft als submikroskopischer Sender oder Empfänger von Licht eine wesentliche Bedeutung haben.

Im folgenden sind bevorzugte Ausführungsformen der Sonde und deren Funktionsweise näher beschrieben.
1) Der Körper der Polyederspitze 1 besteht aus einem für den Spektralbereich der verwendeten elektromagnetischen Strahlung transparenten Material. Das Material des Tetraeders ist ein transparentes Dielektrikum, wie z. B. Glas, Quarz, Saphir oder Diamant, die Beschichtung aller Seiten Pᵢ besteht aus einer dünnen Metallschicht wie z.B. Aluminium, Gold oder Silber wobei die Kante K₁₂ zwischen zwei Seiten P₁ und P₂ unbeschichtet ist und die Spitze 2 beschichtet ist.
   Die Beschichtungen und die unbeschichtete Polyederkante K₁₂ zwischen den beschichteten Seitenflächen dienen der Funktion als Wellenleiterstrukturen 3 mit deren Hilfe elektromagnetische Energie effizient entlang der Kante zur Spitze 2 fortgeleitet werden kann. Es besteht eine Analogie der unbeschichteten Kante zum bekannten Doppeldrahtwellenleiter, der die Fortleitung elektromagnetischer Energie entlang eines gegenüber der Wellenlänge kleinen Querschnittes erlaubt. Die Wellenleitung wird unterbrochen durch die metallische Spitze 2, von der die Abstrahlung elektromagnetischer Energie erfolgt.
2) Polyederspitze 1 aus transparentem Material, bei der alle Seiten Pᵢ (i=1,...,n) und die Spitze 2 mit Metall beschichtet sind. Die semitransparenten Metallschichten und die Kanten dienen der Fortleitung elektromagnetischer Energie in Form von Oberflächenwellen. Die Wellenleitung wird unterbrochen durch die Spitze, von der die Abstrahlung elektromagnetischer Energie erfolgt. Oberflächenwellen in Form von Oberflächenplasmonen können auf einer Metallbeschichtung durch Bestrahlung von der Innenseite der Sonde 1 erzeugt werden. Die Anregung der Oberflächenwellen erfolgt bei geeigneter Wahl des Einfallswinkels der Strahlung relativ zur Fläche Pᵢ. In den Kanten sind die Bedingungen der Erzeugung von Oberflächenwellen aufgrund der veränderten Geometrie von denen an den Seitenflächen verschieden. Deshalb kann es bei geeigneter Wahl der Einfallswinkel des Bestrahlungslichtes zur bevorzugten Wellenleitung entlang der Kantenstruktur kommen.
3) Der Körper der Polyedersonde 1 besteht aus photolumineszierendem Material oder aus einem Material, das in die Spitze 2 einschließenden Bereichen der Oberfläche mit photolumineszierenden Zentren dotiert ist. Bei der Einstrahlung von Licht wird in den photolumineszierenden Bereichen die Photolumineszenz angeregt. Entlang einer Kante kommt es aufgrund der Wellenleitereigenschaft der Kante zu einer Fortleitung des spektral verschobenen Fluoreszenzlichtes zur Spitze 2 hin. Von dort kommt es zur Abstrahlung.
4) Die selbe Anordnung wie in 3 wird verwendet um bei höheren Bestrahlungsintensitäten eine stimulierte Emission der lumineszierenden Zentren in der Polyederspitze zu erzeugen. Die stimulierte Emission führt bei Wahl bekannter geeigneter Lumineszenzzentren zu Laseraktivität, die anhand einer nichtlinearen Zunahme der von der Spitze emittierten Strahlung mit ansteigender Bestrahlungsintensität festgestellt werden kann.
5) Diese Ausführungsform unterscheidet sich von der Ausführungsform 2 oder 3 dadurch, daß der Körper der Polyedersonde aus nicht linear optischem Material mit hohem nicht linear optischen Suszeptibilitäten wie z. B. Lithiumniobat besteht. Bestrahlung der Polyederspitze mit niederfrequentem Licht führt bei hohen Bestrahlungsintensitäten zur Frequenzverdopplung oder zur Frequenzteilung und zur Emission dieses gegenüber dem Bestrahlungslicht frequenzverschobenen Lichtes von der Spitze.

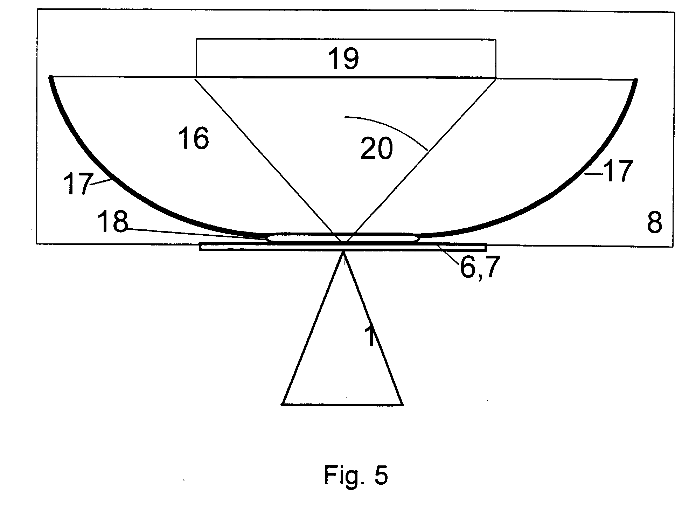

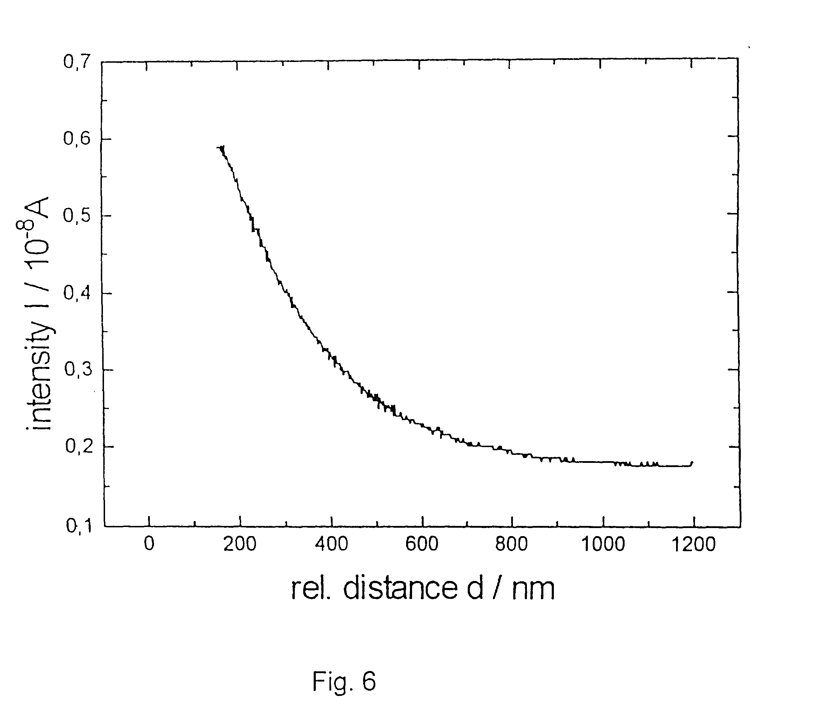

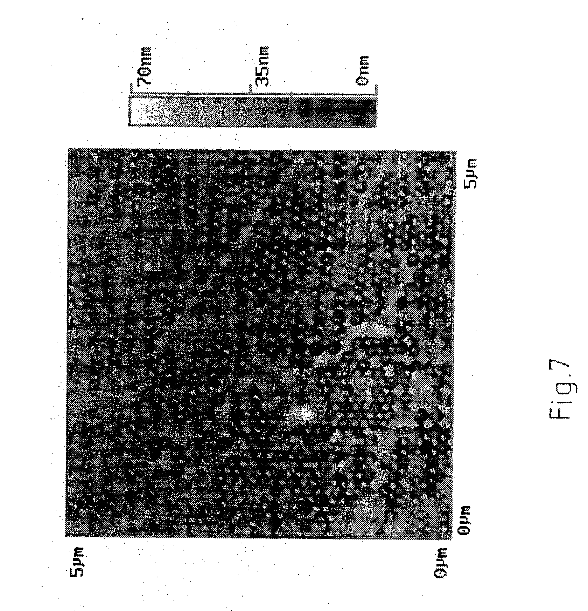

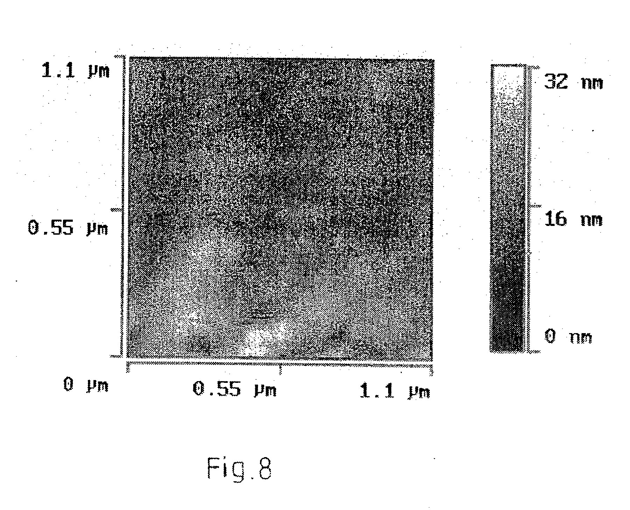

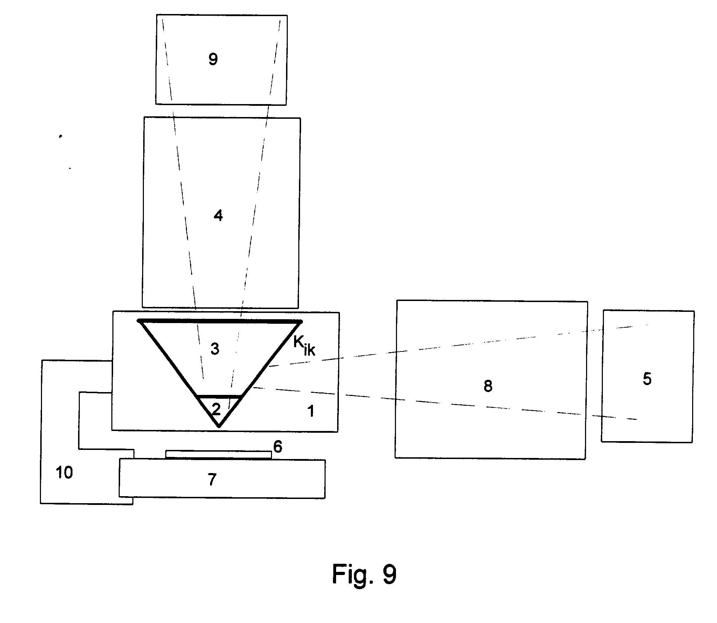

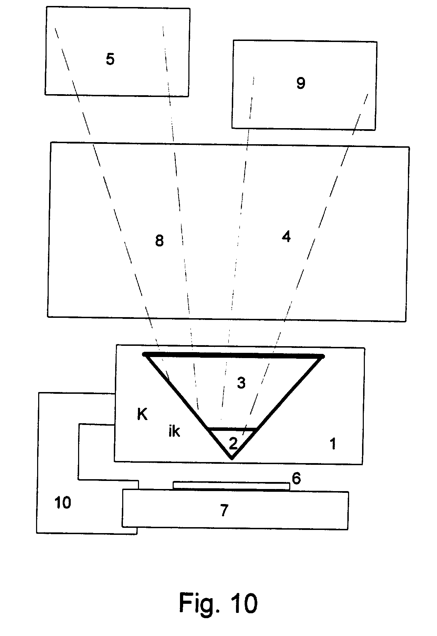

Die Polyederspitzen können auf vielfältige Weise als Nahfeldsonden für die optische Nahfeldmikroskopie eingesetzt werden.
1) Bei einigen Transmissionsanordnungen hat die Polyederspitze die Funktion eines submikroskopischen Senders (Anordnung I). Die Anregung der Sonde zur Strahlung erfolgt durch Bestrahlung mit Licht über die Übertragungsglieder 4 und 3 und von der Spitze 2 emittiertes Licht wird als Signal für die Nahfeldmikroskopie verwendet.
2) Bei anderen Transmissionsanordmumgen hat die Spitze 2 der Sonde 1 die Funktion eines submikroskopischen Empfängers für Licht (Anordnung II). Die Anregung der Sonde erfolgt durch Licht, das von dem Objekt 6 emittiert wird. Die von der Spitze 2 über die Übertragungsglieder 3 und 4 zum Detektor 9 übertragene Energie dient als optisches Nahfeldsignal.
3) In einer speziell realisierten Anordnung der Nahfeldsonde in einem inversen Photonentunnelmikroskop (Fig.5) dient die Nahfeldsonde 1 als Sender wie in Anordnung I beschrieben. Das Objekt 6 ist auf einem dünnen handelsüblichen Deckglas als Träger 7 adsorbiert. Das Deckglas wird mit Hilfe von Immersionsöl 18 an einen Dunkelfeld-Immersionskollektor angebracht. Dieser Kollektor bildet eine Komponente des Übertragungsgliedes 8 in Anordnung I. Der Kollektor besteht aus einem dielektrischen Körper 16, der die Form des Segmentes eines Rotationsparaboloides hat. Dieses Paraboloid ist an der Seite mit einer reflektierenden Schicht 17 versehen. Auch die unbeschichtete Seitenfläche kann alternativ als reflektierende Fläche dienen. Die Tetraederspitze 2 ist im Fokusbereich des Parabolspiegels angeordnet. An der Austrittsfläche des Parabolspiegels ist ein kreisförmiger opaker Strahlstop 19 angebracht. Dieser Strahlstop deckt den Anteil des durch den Kollektor transmittierten Lichtes ab, der vom Fokus des Parabolspiegels in den Konus abgestrahlt wird, der durch den Grenzwinkel der Totalreflexion 20 begrenzt wird. Statt des Parabolspiegels kann auch ein Immersionsobjektiv verwendet werden. Das durch den Kollektor transmittierte Licht fällt auf den Detektor 9. Diese Anordnung mit dem Dunkelfeld-Immersionskollektor dient dazu, daß von der Spitze 2 emittiertes Licht nur auf den Detektor 9 gelangt, wenn die Tetraederspitze an das Objekt angenähert wird in die Reichweite der evaneszenten Moden der Luft-Glasgrenzfläche des Deckglases. Auf diese Weise erhält man ein mit abnehmendem Abstand der Tetraederspitze von dem Deckglas exponentiell anwachsendes Signal wie in Fig.6 dargestellt. Dieses Signal dient dazu, den Abstand zwischen Spitze und Deckglas mit Hilfe eines elektronischen Reglers und des Stellgliedes 10 so einzustellen, daß immer ein vorgegebener Sollwert des Signals eingehalten wird. Zur Aufnahme eines Rasterbilders wird das Deckglas mit Hilfe des Stellgliedes 10 relativ zur Tetraederspitze 1 rasterförmig verschoben. Die durch den Regler bedingte Nachführung der Spitze in axialer Richtung wird als Signal für die Bildgebung aufgenommen. Auf diese Weise wurden mit der Tetraederspitze in Ausführungsform 1 Bilder eines Testobjektes aufgenommen. Fig. 7 zeigt ein Bild des Testobjektes, das mit einem Kraftmikroskop aufgenommen wurde. Fig. 8 zeigt die nahfeldoptische Aufnahme des Ausschnittes eines solchen Testobjektes. So konnte demonstriert werden, daß mit der Tetraederspitze in Ausführungsform 1 mit der hier beschriebenen Anordnung für die optische Nahfeldmikroskopie ein wiedererkennbares Testobjekt mit einer Auflösung von ca 30 nm abgebildet werden kann. Bereits früher wurde über Auflösungen von 15 nm mit dem optischen Nahfeld berichtet. Hierbei handelte es jedoch nicht um wiedererkennbare Strukturen, so daß nicht geklärt ist, ob es sich bei diesen Strukturdetails um eine echte Wiedergabe von Detailstrukturen des Objektes handelt.
4) In einer hier vorgestellten speziellen Anordnung des inversen Photonentunnelmikroskopes ist die oben beschriebene Anordnung dahingehend modifiziert, daß das Deckglas 7 mit einer nahezu opaken Metallschicht aus Silber oder Gold mit einer Dicke von vorzugsweise ca. 10 bis 100 nm beschichtet ist und daß das Objekt 6 auf dieser Metallschicht adsorbiert ist. Von der Nahfeldsonde 1 emittiertes Licht dringt bei Abständen der Spitze von dem Objekt, die größer sind als eine Wellenlänge des Lichtes nicht durch den Metallfilm in den Kollektor ein. Erst wenn die Spitze auf Abstände im Bereich der Wellenlänge an das Objekt herangeführt wird, werden bei Wahl einer geeigneten Wellenlänge des Bestrahlungslichtes lokale Oberflächenplasmonen im Bereich der Spitze 2 und der gegenüberliegenden Metallschicht auf dem Deckglas 7 angeregt. Diese führen zur Anregung delokalisierter Oberflächenplasmonen in der Metallschicht, die wiederum zur Abstrahlung von Licht durch den Kollektor führen. Auf diese Weise erhält man ein mit dem Abstand variierendes Signal des durch den Kollektor transmittierten Lichtes, das als Signal für die inverse Photonentunnelmikroskopie dient. Diese Anordnung hat die Eigenschaft, daß die resonante Plasmonenanregung sehr stark vom Brechungsindex des Objektes 6 im Spalt zwischen Spitze 2 und Metallschicht (auf Träger 7) beeinflußt wird, und deshalb ein sehr hoher Kontrast des Nahfeldsignals für geringe Variationen des Brechungsindexes des Objektes 6 erzielt werden kann.
5) Reflexionsanordnungen.
   Reflexionsanordnungen für die optische Nahfeldmikroskopie erweiteren die Anwendbarkeit der optischen Nahfeldmikroskopie auf nicht transparente Objekte (6). Zwei spezielle Reflexionsanordnungen für die optische Nahfeldmikroskopie mit der Polyederspitze werden im folgenden erläutert.
   a) (Fig. 9) Die Bestrahlung der Spitze 2 erfolgt von einer Lichtquelle 5 aus durch ein fokussierendes Übertragungselement 8, so daß der Beleuchtungsstrahl von außen her in den Spalt zwischen Spitze 1 und Objekt 6 auf einen Bereich einer Kante Kᵢₖ fokussiert ist, der bis zur Spitze 2 reicht oder wenige µm vor ihr endet. Das Licht, das von der Spitze in die Polyederspitze hinein abgestrahlt wird und aus der Grundfläche P₀ austritt wird mit Hilfe eines Mikroskopobjektives 4 auf einen Detektor 9 in der Bildebene des Objektivs gerichtet, wobei das Objektiv so justiert ist, daß die Spitze 2 in der Objektebene liegt.
   b) In einer Auflicht- Reflexionsanordnung (Fig. 10) wird die Polyederspitze 1 von einer Lichtquelle 5 aus durch ein Übertragungsglied 4, 8 z.B. ein Mikroskopobjektiv so bestrahlt, daß ein fokussierter Strahl durch die Grundfläche P₀ hindurch auf einen Bereich einer Kante Kᵢₖ fokussiert, der bis zur Spitze 2 reicht oder einige µm vor der Spitze endet. Das von der Spitze 2 in die Polyederspitze 3 zurückgestreute und durch die Grundfläche P₀ austretende Licht wird mit Hilfe des Übertragungsgliedes 4, 8 auf den Detektor gerichtet.
6) Anordnungen für die simultane SNOM und STM.

Die Nahfeldsonde 1 wird in einer beliebigen Anordnung der optischen Nahfeldmikroskopie betrieben. Ein Draht wird durch eine elektrisch leitende Verbindung mit der Metallbeschichtung der Polyederspitze 1 kontaktiert. Ebenso wird eine elektrisch leitende Stelle des Objektes mit einer elektrischen Leitung kontaktiert. Wie in der Rastertunnelmikroskopie üblich wird eine Tunnelspannung zwischen den beiden elektrischen Anschlüssen angelegt und der Strom wird gemessen. Die simultane STM und SNOM kann auf verschiedene Weise realisiert werden. So kann wie in der üblichen STM das Stromsignal verwendet werden, um den Abstand zwischen Spitze und Objekt zu regeln. Das Nachführsignal wird als STM- Signal für die Bildgebung registriert. Das optische Signal wird als Signal für die simultane optische Nahfeldmikroskopie aufgenommen. Alternativ kann das optische Nahfeldsignal wie oben beschrieben zur Abstandsregelung verwendet werden, während das Stromsignal als STM- Signal aufgenommen wird.

Die Anordnung 6 kann auch zur Untersuchung lichtinduzierter Einflüsse auf den Tunnelstrom verwendet werden. Diese Anordnungen hat gegenüber früheren Anordnungen zur Untersuchung lichtinduzierter Einflüsse (L. Arnold et al Appl. Phys. Lett. 51, S. 786, 1987) auf den Tunnelstrom den entscheidenden Vorteil, daß die Bestrahlung des Objektes nur auf einem durch die Nahfeldsonde beschränkten Bereich erfolgt, der sehr viel kleiner ist, als ein durch Fokussierung bestrahlter Bereich.

Die Nahfeldsonden können nicht nur als Sonden für die optische Nahfeld Rastermikroskopie eingesetzt werden. Sie sind allgemein dann als Sonden einsetzbar, wenn es um die Messung lokaler auch zeitabhängiger optischer Eigenschaften geht, wie der Vermessung der räumlichen Verteilung von elektromagnetischen Strahlungs- oder Nahfeldern, der Messung zeitabhängiger Intensitätsschwankungen in sehr kleinen Bereichen und der Vermessung der Punktübertragungsfunktion optischer Systeme, indem in einer Eintrittsebene des Systems die emittierende Nahfeldsonde als punktförmige Lichtquelle angeordnet wird und die Intensität an einem anderen Ort als Funktion der Anordnung der emittierenden Sonde gemessen wird.

## Patentansprüche

1. Mikroskopischer Sender oder Detektor elektromagnetischer Strahlung, im weiteren als Nahfeldsonde (1) bezeichnet, deren Körper K die Form einer Polyederspitze hat und aus einem Material besteht, das wenigstens teilweise für elektromagnetische Strahlung im verwendeten Spektralbereich durchlässig ist, wobei die Polyederspitze durch eine gedachte Grundfläche P₀ begrenzt ist über die hinaus der wesentliche Teil des Körpers K zu einem nicht näher spezifizierten Gesamtkörper der Sonde fortgesetzt ist, und n Seitenflächen Pⱼ (j=1,...,n) hat dergestalt, daß zwischen benachbarten Seitenflächen Pᵢ und Pₖ scharfe Kanten Kᵢₖ ausgebildet sind, die in eine scharfe Spitze (2) münden, wobei die Spitze (2) der Nahfeldsonde (1) als nahezu punktförmige Quelle für die Emission elektromagnetischer Strahlung in den Außenraum der Sonde oder als nahezu punktförmiger Empfänger für das Eindringen elektromagnetischer Felder in das Innere der Nahfeldsonde dient, wobei mindestens zwei Seitenflächen Pⱼ (j=1,...,n) des Körpers K der Polyedersonde (1) mit dünnen, die elektromagnetische Strahlung im verwendeten Spektralbereich partiell absorbierenden, elektrisch leitenden Schichten beschichtet sind, die eine Dicke von weniger als 0,2 µm aufweisen, dadurch gekennzeichnet daß auch der vorderste Teil der Polyederspitze (2) mit dem verwendeten Material beschichtet ist.

2. Nahfeldsonde (1) nach Anspruch 1 dadurch gekennzeichntet, daß alle Seitenflächen Pᵢ (i=1,...,n) mit dem Beschichtungsmaterial beschichtet sind.

3. Nahfeldsonde (1) nach einem der Ansprüche 1 oder 2, dadurch gekennzeichnet, daß alle Kanten K_{i,k} mit dem Beschichtungsmaterial beschichtet sind.

4. Nahfeldsonde (1) nach einem der Ansprüche 1 bis 3, dadurch gekennzeichnet, daß eine Kante K_{i,k} zwischen zwei benachbarten beschichteten Seiten Pᵢ und Pₖ (i,k>0) unbeschichtet ist.

5. Nahfeldsonde (1) nach einem der Ansprüche 1 bis 4, dadurch gekennzeichnet, daß der Körper K der Polyedersonde aus photolumineszierendem Material besteht, oder daß das Material des Körpers in einem die Spitze (2) einschließenden Bereich der Oberfläche mit photolumineszierenden Zentren dotiert ist.

6. Nahfeldsonde (1) nach einem der Ansprüche 1 bis 5, dadurch gekennzeichnet, daß der Körper K der Polyedersonde aus nicht linear optischem Material mit hohen nicht linearen optischen Suszeptibilitäten besteht.

7. Vorrichtung für die inverse Photonentunnelmikroskopie unter Verwendung einer Nahfeldsonde nach einem der Ansprüche 1 bis 6, dadurch gekennzeichnet, daß das zu untersuchende Objekt (6) auf einem Träger (7) adsorbiert ist.

8. Vorrichtung für die inverse Photonentunnelmikroskopie nach Anspruch 7, dadurch gekennzeichnet, daß eine dünne für das Bestrahlungslicht nahezu opake Schicht aus Silber oder Gold einer Dicke von ca. 10 bis 100 nm als Bestandteil des Trägers (7) vorgesehen ist, die als Substrat dient für das zu untersuchende Objekt (6).

9. Vorrichtung für die optische Nahfeldmikroskopie und die simultane Rastertunnelmikroskopie unter Verwendung einer Nahfeldsonde (1) nach einem der Ansprüche 1 bis 6, dadurch gekennzeichnet, daß die Beschichtungen mit dem Beschichtungsmaterial und das Objekt (6) jeweils mit einem elektrischen Kontakt versehen sind, so daß der zwischen Spitze (2) und Objekt (6) fließende Strom gemessen werden kann.

## Claims

1. Microscopic electromagnetic radiation transmitter or detector, which is designated as near field probe (1) in the following text, the body K of which has the shape of a polyhedron point and consists of a material which is at least partially permeable to electromagnetic radiation in the spectral region used, the polyhedron point being delimited by an imaginary base surface P₀ beyond which the substantial part of the body K is continued to form a total probe body not defined in greater detail, and comprising n side faces Pⱼ (j = 1,...,n) in such a manner that between adjacent side faces Pᵢ and Pₖ sharp edges Kᵢₖ are formed leading to an acute point (2), the point (2) of the near field probe (1) serving as a nearly point-shaped source for the emission of electromagnetic radiation into the outer space of the probe, or as a nearly point-shaped receiver for the penetration of electromagnetic fields into the interior of the near field probe, at least two side faces Pⱼ (j = 1, ..., n) of the body K of the polyhedron probe (1) being coated with thin electrically conductive layers which adsorb a part of the electromagnetic radiation in the spectral region used, said layers having a thickness of less than 0.2 µm, characterised in that also the front part of the polyhedron point (2) is coated with the material used.

2. Near field probe (1) as claimed in claim 1, characterised in that all side faces Pᵢ (i = 1, ..., n) are coated with the coating material.

3. Near field probe (1) as claimed in one of claims 1 or 2, characterised in that all edges K_{i,k} are coated with the coating material.

4. Near field probe (1) as claimed in any one of claims 1 to 3, characterised in that one edge K_{i,k} between two adjacent coated side faces Pᵢ and Pₖ (i, k>0) is not coated.

5. Near field probe (1) as claimed in any one of claims 1 to 4, characterised in that the body K of the polyhedron probe consists of a photoluminescence material, or that the material of the body is doped with photoluminescence centres in a region of the surface including the point (2).

6. Near field probe (1) as claimed in any one of claims 1 to 5, characterised in that the body K of the polyhedron point consists of a non-linear optical material with high non-linear optical susceptibilities.

7. Device for the inverse photon tunnel microscopy under utilisation of a near field probe according to any one of claims 1 to 6, characterised in that the object (6) to be examined is adsorbed on a carrier (7).

8. Device for the inverse photon tunnel microscopy as claimed in claim 7, characterised in that a thin layer of silver or gold having a thickness of about 10 to 100 nm and being nearly opaque for the radiation light is provided as a component part of the carrier, said layer serving as a substrate for the object (6) to be examined.

9. Device for the optical near field microscopy and the simultaneous scanning tunnel microscopy under utilisation of a near field probe (1) according to any one of claims 1 to 6, characterised in that the coatings with the coating material and the object (6) are in each case provided with an electrical contact so that the current flowing between the point (2) and the object (6) can be measured.

## Revendications

1. Emetteur ou détecteur microscopique de rayonnement électromagnétique, désigné ci-après par le terme sonde de champ rapproché (1), dont le corps K a la forme d'une pointe de polyèdre et qui est constitué par un matériau qui est tout au moins partiellement perméable au rayonnement électromagnétique dans la gamme spectrale utilisée, où la pointe du polyèdre est bornée par une surface de base imaginaire P₀ et au-delà de laquelle la portion essentiellement du corps K est prolongée par un corps global non spécifié de la sonde, et qui comporte n faces latérales Pⱼ (j=1,......,n) de manière telle qu'entre des faces latérales Pᵢ et Pₖ sont formées des arêtes vives Kᵢₖ, qui aboutissent à une pointe vive (2), où la pointe (2) de la sonde de champ rapproché (1) sert de source sensiblement ponctuelle pour l'émission d'un rayonnement électromagnétique vers l'enceinte extérieure de la sonde ou de récepteur sensiblement ponctuel pour la pénétration de champs magnétiques vers l'intérieur de la sonde de champ rapproché, où au moins deux faces latérales Pⱼ (j=1,......,n) du corps K de la sonde polyédrique (1) sont revêtues de minces couches à conductivité électriques absorbant partiellement la rayonnement électromagnétique dans la gamme spectrale utilisée, couches qui présentent une épaisseur de moins de 2 µm, caractérisé en ce que la partie située le plus en avant de la pointe (2) du polyèdre est elle aussi revêtue du matériau utilisé.

2. Sonde de champ rapproché suivant la revendication 1, caractérisée en ce que toutes les faces latérales Pᵢ (i=1,......,n) sont revêtues du matériau de revêtement.

3. Sonde de champ rapproché suivant l'une ou l'autre des revendications 1 ou 2, caractérisée en ce que toutes les arêtes Kᵢₖ sont revêtues du matériau de revêtement.

4. Sonde de champ rapproché suivant l'une quelconque des revendications 1 à 3, caractérisée en ce qu'une arête Kᵢₖ située entre deux faces revêtues voisines Pᵢ et Pₖ (i,1>0) n'est pas revêtue.

5. Sonde de champ rapproché (1) suivant l'une quelconque des revendications 1 à 4, caractérisée en ce que le corps K de la sonde polyédrique est constitué par un matériau photoluminescent, ou en ce que le matériau du corps est, dans une région de sa surface comprenant la pointe (2), doté de centres ohotoluminescents.

6. Sonde de champ rapproché (1) suivant l'une quelconque des revendications 1 à 5, caractérisée en ce que le corps K de la sonde polyédrique est constitué par un matériau optique non linéaire avec des susceptibilités optiques élevées non linéaires.

7. Dispositif pour la microscopie photonique inverse en tunnel avec utilisation d'une sonde de champ rapproché suivant l'une quelconque des revendications de 1 à 6, caractérisé en ce que l'objet (6) à examiner est adsorbé sur un support (7).

8. Dispositif pour la microscopie photonique inverse en tunnel suivant la revendication 7, caractérisé en ce qu'une mince couche d'argent ou d'or, sensiblement opaque à l'égard de la lumière de rayonnement, d'une épaisseur d'environ 10 à 100 nm est prévu en tant que composant du support (7), et sert de substrat pour l'objet à examiner (6).

9. Dispositif pour la microscopie optique de champ rapproché et la microscopie à grille et tunnel simultanée avec utilisation d'une sonde de champ rapproché (1) suivant l'une quelconque des revendications de 1 à 6, caractérisé en ce que les revêtements avec le matériau de revêtement et l'objet (6) sont tous munis d'un contact électrique, de telle sorte que le courant circulant entre la pointe (2) et l'objet (6) peut être mesuré.
